# EUROPÄISCHE PATENTSCHRIFT

(11) **EP 3 665 711 B1**
(45) Veröffentlichungstag und Bekanntmachung des Hinweises auf die Patenterteilung: **30.03.2022**
(21) Anmeldenummer: 18758557.5
(22) Anmeldetag: 09.08.2018
(51) Int. Cl.: H01F 41/02, H01F 27/245, B21C 47/18, B21C 47/34, B21C 51/00, B21D 28/02, B21D 43/11

(54) **VORRICHTUNG UND VERFAHREN ZUR HERSTELLUNG VON TRANSFORMATORKERNEN**
APPARATUS FOR AND METHOD OF MANUFACTURING TRANSFORMER CORES
APPAREIL ET PROCEDE DE FABRICATION DE NOYAUX DE TRANSFORMATEUR

(30) Priorität: 10.08.2017 DE 102017007548
(43) Veröffentlichungstag der Anmeldung: 17.06.2020
(73) Patentinhaber: Heinrich Georg GmbH Maschinenfabrik, 57223 Kreuztal (DE)
(72) Erfinder: LOTH, Volker, 57258 Freudenberg (DE); FRIEDRICH, Jost, 57271 Hilchenbach (DE)
(74) Vertreter: advotec.
(86) Internationale Anmeldenummer: PCT/EP2018/071687
(87) Internationale Veröffentlichungsnummer: WO 2019/030349

(56) Entgegenhaltungen:
- EP-A2- 2 660 836
- DE-A1- 4 338 981
- DE-B3- 10 332 018
- US-A- 4 578 860

## Beschreibung

Die Erfindung betrifft eine Vorrichtung und ein Verfahren zur Herstellung von Transformatorkernen, wobei die Vorrichtung ein Haltesystem mit einem Legetisch zur Aufnahme von Blechen, aus denen ein Transformatorkern ausbildbar ist, und zumindest zwei Positionierhilfen für die Bleche aufweist, wobei der Legetisch eine Positionierfläche für die Positionierhilfen ausbildet und mit den Positionierhilfen bestückbar ist.

Die aus dem Stand der Technik bekannten Anlagen zur Herstellung von Transformatorkernen und sind entsprechend einem Prozessablauf so aufgebaut, dass zunächst Transformatorbleche aus Blechstreifen mittels einer Schneidvorrichtung ausgeschnitten werden. Die Blechstreifen sind auf einer Bandstahlrolle bevorratet, welche von einem Haspelkopf einer Haspel gehaltert ist. Die Haspel kann eine Mehrzahl von Haspelköpfen mit Bandstahlrollen aufweisen, sodass verschiedene Blechstreifen der Schneidvorrichtung nach Bedarf zugeführt werden können. Ein Wechsel von Blechstreifen bzw. eine Zuführung eines Blechstreifens zu der Schneidvorrichtung kann beispielsweise manuell oder auch über ein Transportband erfolgen, wobei jedoch der Wechsel des Blechstreifens bzw. der Bandstahlrolle zeitaufwendig ist.

Die in der Schneidvorrichtung geschnittenen Bleche können unterschiedlichste Geometrien aufweisen, da ein Transformatorkern regelmäßig aus Blechen unterschiedlicher Gestalt zusammengesetzt wird. Die Bleche können von einem Transportband von der Schneidvorrichtung weggeführt und zur Weiterverarbeitung bevorratet bzw. gestapelt werden. Ein Zusammensetzen des Transformatorkerns aus den Blechen erfolgt auf einem sogenannten Legetisch. An dem Legetisch sind als Positionierhilfen Fädelbolzen und/oder Blechanschläge fest montiert und die Bleche werden an den Fädelbolzen bzw. Blechanschlägen zu dem Transformatorkern zusammengesetzt bzw. gestapelt. Um die Bleche örtlich festlegen zu können sind zumindest immer zwei Positionierhilfen erforderlich. Die Bleche weisen insbesondere Bohrungen bzw. Ausschnitte auf, in die die Fädelbolzen eingreifen können. Die Bleche werden auf die Fädelbolzen aufgesteckt bzw. entlang von Blechanschlägen gestapelt und so lagegenau relativ zueinander positioniert. Das Bilden eines Stapels Bleche auf dem Legetisch kann prinzipiell manuell, aber auch automatisiert erfolgen. Wesentlich ist, dass stets eine ausreichende Anzahl unterschiedlicher Bleche zum Aufbau des Transformatorkerns zur Verfügung steht, um beispielsweise Stillstandszeiten zu vermeiden.

Da der Legetisch stets für einen Transformatorkern mit einer in Führungen verschiebbaren Position der Positionierhilfen aufgebaut wird, kann ein Legetisch immer nur nach einem Umbau der Positionierhilfen zur Herstellung einer Art eines Transformatorkerns genutzt werden. Wenn mit einer Anlage verschiedenste Arten von Transformatorkernen hergestellt werden sollen, wird eine entsprechend große Anzahl Legetische für Kernformen außerhalb der Verschiebebereiche der Positionierhilfen benötigt, die vorgehalten werden müssen.

EP 2 660 836 A2, EP 4,578,860, DE 103 32 018 B3 und DE 43 38 981 A1 offenbaren jeweils eine Vorrichtung und ein Verfahren zur Herstellung von Transformatorkernen gemäss Oberbegriff von Anspruch 1 bzw. Anspruch 14.

Der vorliegenden Erfindung liegt daher die Aufgabe zugrunde, eine Vorrichtung sowie ein Verfahren zur Herstellung eines Transformatorkerns vorzuschlagen, die bzw. das eine kostenoptimierte Herstellung von Transformatorkernen ermöglicht.

Diese Aufgabe wird durch eine Vorrichtung mit den Merkmalen den Anspruchs 1 und ein Verfahren mit den Merkmalen des Anspruchs 14 gelöst.

Die erfindungsgemäße Vorrichtung zur Herstellung von Transformatorkernen weist ein Haltesystem mit einem Legetisch zur Aufnahme von Blechen, aus denen ein Transformatorkern ausbildbar ist, und zumindest zwei Positionierhilfen für die Bleche auf, wobei der Legetisch eine Positionierfläche für die Positionierhilfen ausbildet und mit den Positionierhilfen bestückbar ist, wobei der Legetisch und die Positionierhilfen derart ausgebildet sind, dass eine freie Positionierung mit einer ortsunabhängigen Befestigung der Positionierhilfen innerhalb der Positionierfläche möglich ist, wobei die Vorrichtung ein Positioniersystem aufweist, mittels dem die Positionierhilfen auf dem Legetisch anordbar und/oder entfernbar sind.

Erfindungsgemäß ist das Haltesystem zur Befestigung der Positionierhilfen, insbesondere Fädelbolzen und/oder Blechanschlägen , an dem Legetisch so ausgebildet, dass eine prinzipiell freie Positionierung der Positionierhilfen sowie deren unabhängige Befestigung an einer beliebigen Stelle der Positionierfläche möglich sind. Die Position der Positionierhilfen ist daher nicht mehr an dafür an dem Legetisch vorgesehenen Befestigungsstellen oder ein Befestigungsraster gebunden, wodurch eine flexible und beliebige, an die Geometrie des herzustellenden Transformatorkerns angepasste Anordnung der Positionierhilfen auf dem Legetisch möglich wird. Weiter weist die Vorrichtung das Positioniersystem auf, mittels dem die Positionierhilfen auf der Positionierfläche angeordnet bzw. entfernt werden können. Durch die Möglichkeit die Positionierhilfen mittels des Positioniersystems auf den Legetisch bzw. der Positionierfläche des Legetischs in einer beliebigen Position anordnen zu können, wird es möglich, für unterschiedlichste Kerngrößen und Arten von Kernbauformen nach Bedarf Legetische aufzubauen. Diese Legetische müssen dann nicht mehr wie bei der herkömmlichen, beschränkt einstellbaren, ortsabhängigen Befestigung der Positionierhilfen in großer Stückzahl vorgehalten werden, da eine Bestückung der Legetische mit den Positionierhilfen durch das Positioniersystem unmittelbar vor dem Stapeln eines Transformatorkerns erfolgen kann. Nach der Entnahme des fertigen Transformatorkerns von dem Legetisch können die Positionierhilfen von dem Legetisch mittels des Positioniersystems wieder entfernt und gegebenenfalls wieder neu positioniert werden, um einen Transformatorkern mit abweichender Gestalt auszubilden. Prinzipiell ist so die Herstellung verschiedenster Transformatorkerne mit nur einem Legetisch möglich. Die Anzahl von Legetischen kann so wesentlich reduziert, ein Umbauaufwand für Positionierhilfen gemindert und die Kosten zur Herstellung unterschiedlicher Transformatorkerne wesentlich gesenkt werden.

Vorteilhaft kann das Positioniersystem einen mehrachsigen Roboter umfassen. Das Positioniersystem kann auch von dem mehrachsigen Roboter ausgebildet sein. Eine Anordnung von Fädelbolzen bzw. Blechanschlägen auf dem Legetisch kann dann besonders einfach mittels des Roboters automatisiert erfolgen. Auch können diese Positionierhilfen dann wieder mittels des Roboters von dem Legetisch entfernt werden.

Das Haltesystem kann als genannte Positionierungshilfen für die Bleche jeweils einen innerhalb der Positionierfläche positionierbaren Fädelbolzen und/oder einen Blechanschlag zur seitlichen Ablage der Bleche umfassen. Das Haltesystem kann auch mehrere Fädelbolzen, Blechanschläge, Unterbauten und Oberbauten umfassen. Diese Elemente des Haltesystems können prinzipiell auch manuell angeordnet werden. Eine Anordnung aufgrund der bereits auf der Positionierfläche befestigten Fädelbolzen ist besonders einfach.

Der jeweilige Fädelbolzen auf dem Legetisch und/oder der jeweilige Blechanschlag auf dem Legetisch können mittels des Positioniersystems positionierbar und/oder entfernbar sein. Das Positioniersystem bzw. der Roboter kann dann auch zur Anordnung und zum Abbau dieser Bauteile des Haltesystems genutzt werden, sodass der Legetisch vollständig automatisiert mit dem Roboter auf- und abgebaut werden kann.

Das Positioniersystem kann ein Magazin mit Fädelbolzen, Blechanschlägen, Unterbauten und/oder Oberbauten umfassen. Wenn das Positioniersystem einen Roboter aufweist kann dieser dann diese Bauteile zum Aufbau des Haltesystems nutzen. In dem Magazin kann eine Anzahl verschiedenster Fädelbolzen, Blechanschläge, Unterbauten bzw. Oberbauten vorgehalten werden, sodass unterschiedlichste Haltesysteme automatisiert aufgebaut werden können. Das Magazin ist dann vorzugsweise benachbart dem Roboter positioniert, sodass dieser direkt auf das Magazin bzw. die darin enthaltenen Bauteile zugreifen kann.

Besonders vorteilhaft ist es, wenn die Positionierhilfen bzw. Fädelbolzen mit jeweils einer Halteeinrichtung zur Befestigung der Fädelbolzen auf der Positionierfläche ausgebildet sind. Wenn das Haltesystem Blechanschläge und Unterbauten umfasst, können diese ebenfalls jeweils mit einer Halteeinrichtung ausgestattet sein. Die Halteeinrichtung ist vorzugsweise so ausgebildet, dass die ortsunabhängige Befestigung der Fädelbolzen auf der Positionierfläche möglich wird. Der beispielsweise Fädelbolzen bzw. Blechanschlag umfasst die Halteeinrichtung, sodass die Halteeinrichtung integraler Bestandteil des Fädelbolzens sein kann. Wesentlich ist, dass die Halteeinrichtung eine schnelle und ortsunabhängige Befestigung des Fädelbolzens auf der Positionierfläche ermöglicht.

Zur Befestigung der Positionierhilfen bzw. Fädelbolzen und/oder Blechanschläge an der Positionierfläche kann die Halteeinrichtung eine Magnetspanneinheit, eine Vakuumspanneinheit oder eine mechanische Spanneinheit aufweisen. Somit kann der Fädelbolzen selbst die zur Befestigung an der Positionierfläche erforderliche Haltekraft aufbringen.

Die Magnetspanneinheit kann einen Akkumulator und eine Spule aufweisen. Der Akkumulator kann eine Batterie sein, wobei die Spule zur Ausbildung eines Magnetfeldes dienen kann. Die Spule kann beispielsweise Teil eines Elektromagneten sein, mit dem eine Haltekraft zur Befestigung des Fädelbolzens und/oder Blechanschlag an der Positionierfläche ausgebildet werden kann. Die Positionierfläche ist dann vorzugsweise aus einem magnetisierbaren Material, beispielsweise Stahl, ausgebildet. Die Spule kann auch Teil eines Elektromotors sein, mit dem ein Permanentmagnet relativ zu der Positionierfläche positioniert werden kann. Weiter ist es möglich einen Elektromagneten mit einem Elektromotor relativ zu der Positionierfläche zu positionieren und nachfolgend ein Magnetfeld auszubilden. Auch kann ein Wechsel des Magnetfeldes durch Umpolen des Elektromagneten bzw. der Spule vorgesehen sein.

Die Vakuumspanneinheit kann eine Vakuumpumpe und/oder einen Vakuumspeicher aufweisen. Die Vakuumpumpe kann in dem Fädelbolzen, dem Blechanschlag bzw. der Halteeinrichtung integriert sein. Mittels der Vakuumpumpe, welche über eine Batterie mit Strom versorgt werden kann, kann ein Vakuum zwischen der Halteeinrichtung und der Positionierfläche ausgebildet werden, welches eine Haltekraft und damit eine Befestigung des beispielsweise Fädelbolzens bewirkt. Alternativ oder ergänzend kann in der Halteeinrichtung ein Vakuumspeicher vorgesehen sein, der dann zur Erzeugung des Vakuums, beispielsweise durch einfaches Öffnen eines Ventils, genutzt werden kann. Das Vakuum kann in jedem Fall immer durch Öffnen eines Ventils aufgehoben werden, sodass der Fädelbolzen leicht von der Positionierfläche entfernt werden kann. Die Vakuumspanneinheit bzw. die Halteeinrichtung kann auch Dichtlippen aufweisen, welche die Ausbildung eines Vakuums zwischen der Positionierfläche und der Halteeinrichtung erleichtern. Weiter können Druckwächter bzw. Drucksensoren der Vakuumspanneinheit einen Druck des Vakuums überwachen, um bei einem Ansteigen des Drucks über einen längeren Zeitraum die Vakuumpumpe zu betätigen oder den Vakuumspeicher zur Korrektur des Drucks zu nutzen.

Die Halteeinrichtung kann einen Energiespeicher zur Ausbildung einer Haltekraft aufweisen. Der Energiespeicher kann ein Akkumulator bzw. eine Batterie oder, wenn die Halteeinrichtung eine Vakuumspanneinheit ist, ein Vakuumspeicher sein. Der Energiespeicher kann einfach aufgeladen werden, wenn die Halteeinrichtung bzw. die beispielsweise Fädelbolzen in einem Magazin gelagert werden.

In einer weiteren Ausführungsform kann der Legetisch eine magnetisierbare Spannplatte oder eine Vakuumspannplatte aufweisen, die die Positionierfläche ausbildet. Diese Spannplatten können modular aufgebaut sein, sodass die Positionierfläche beispielsweise aus einer Mehrzahl von Spannplatten zusammengesetzt sein kann. Zum Verweis auf die vorangegangenen Ausführungen zur Magnetspanneinheit und Vakuumspanneinheit kann der Legetisch dann in Art einer Magnetspanneinheit oder einer Vakuumspanneinheit ausgebildet sein. Folglich kann der Legetisch einen Energiespeicher aufweisen. Der Legetisch kann demnach auch einen Vakuumspeicher oder eine Vakuumpumpe umfassen. Ein Aufladen des Energiespeichers des Legetischs kann immer dann erfolgen, wenn der Legetisch im Rahmen eines Arbeitsschritts stationär positioniert ist.

Vorteilhaft ist es, wenn die Positionierfläche vollkommen eben ausgebildet ist. Wenn eine magnetisierbare Spannplatte die Positionierfläche ausbildet kann der Legetisch bzw. die Positionierfläche aus einer Anordnung von Polen ausgebildet sein, die voneinander durch einen Zwischenraum beabstandet sind. Eine ebene Positionierfläche ermöglicht stets eine beliebige Anordnung von Fädelbolzen auf der Positionierfläche.

Die Vorrichtung kann eine Mehrzahl von Legetischen aufweisen, die automatisiert bewegbar sind. Die Legetische können selbstfahrend ausgebildet sein, sodass die Legetische zwischen Arbeitsstationen selbstständig verkehren können. Die Legetische können dann in Art eines Wagens ausgebildet sein oder von einem Wagen transportiert werden und Räder sowie einen Antrieb aufweisen. Die Legetische können sich dabei frei auf einem Untergrund bewegen oder in festen Bahnen, beispielswiese auf Schienen zwischen Arbeitsstationen verkehren.

Bei dem erfindungsgemäßen Verfahren zur Herstellung von Transformatorkernen mit einer Vorrichtung werden Bleche, aus denen ein Transformatorkern ausgebildet wird, auf einem Legetisch eines Haltesystems der Vorrichtung und mit zumindest zwei Positionierhilfen des Haltesystems für die Bleche aufgenommen, wobei der Legetisch eine Positionierfläche für die Positionierhilfen ausbildet und mit den Positionierhilfen bestückt wird, wobei der Legetisch und die Positionierhilfen derart ausgebildet sind, dass eine freie Positionierung und eine ortsunabhängige Befestigung der Positionierhilfen innerhalb der Positionierfläche möglich ist, und die Positionierhilfen innerhalb der Positionierfläche auf dem Legetisch frei positioniert und ortsunabhängig befestigt werden, wobei die Positionierhilfen mittels eines Positioniersystems der Vorrichtung auf dem Legetisch angeordnet und/oder entfernt werden. Zu den Vorteilen des erfindungsgemäßen Verfahrens wird auf die Vorteilsbeschreibung der erfindungsgemäßen Vorrichtung verwiesen.

Mittels einer Steuereinrichtung der Vorrichtung kann eine Position der Positionierhilfen bzw. Fädelbolzen und/oder Blechanschläge innerhalb der Positionierfläche in Abhängigkeit einer Gestalt des herzustellenden Transformatorkerns bestimmt werden. Die Steuereinrichtung kann Mittel zur Datenverarbeitung, wie beispielsweise einen Computer umfassen und/oder eine SPS-Steuerung sein. Die Gestalt des herzustellenden Transformatorkerns kann sich aus den gewünschten physikalischen Eigenschaften und den davon abzuleitenden Maßen ergeben, die mit einem Kernkonfigurator für Transformatorkerne bestimmt bzw. berechnet werden können. Der Kernkonfigurator kann insbesondere eine Software sein. Ebenso können Maße für Bleche des Transformatorkerns aus dem Kernkonfigurator abgeleitet werden, die dann von der Steuereinrichtung zur Berechnung einer Position der Fädelbolzen und/oder Blechanschläge innerhalb der Positionierfläche genutzt werden können. Die Steuereinrichtung kann dann genaue Positionen für die Fädelbolzen innerhalb der Positionierfläche bestimmen.

Von einem Steuersystem einer Anlage zur Herstellung von Transformatorkernen kann in Abhängigkeit von einen Transformatorkern beschreibenden Bauteildaten Steuerbefehle an die Steuereinrichtung übermittelt werden. Das Steuersystem kann beispielsweise den Kernkonfigurator umfassen. Weiter kann vorgesehen sein, dass das Steuersystem die gesamte Anlage zur Herstellung von Transformatorkernen steuert. Die im Steuersystem vorhandenen Bauteildaten eines Transformatorkerns können in Steuerbefehle umgewandelt werden, die an die Steuereinrichtung übermittelt werden. Beispielsweise kann das Steuersystem bereits die Positionen der Fädelbolzen bzw. Blechanschläge auf der Positionierfläche bestimmen bzw. berechnen und der Steuereinrichtung Steuerbefehle zur Bestückung eines Legetisches mit beispielsweise Fädelbolzen an den berechneten Positionen übermitteln. Das Steuersystem kann ebenfalls Mittel zur Datenverarbeitung, wie einen Computer mit einer Software, umfassen.

Mittels des Steuersystems kann die Positionierung der Positionierhilfen , insbesondere Fädelbolzen und/oder Blechanschlägen, auf dem Legetisch, dem Positioniersystem benachbarter Ablagepositionen für die jeweiligen Bleche und/oder eine Schneidsequenz einer Schneidvorrichtung für Bleche ermittelt werden. Beispielsweise ist es dann auch möglich mit dem Steuersystem die verschiedenen Arbeitsstationen der Anlage zur Herstellung von Transformatorkernen so aufeinander abzustimmen, dass ein optimaler Materialfluss bei geringen Durchlaufzeiten realisiert werden kann. Die Schneidfrequenz einer Schneidvorrichtung für Bleche kann beispielsweise an eine Menge von Blechen an Ablagepositionen an einem Roboter angepasst werden, sodass stets eine ausreichende Menge Bleche an den Ablagepositionen zur Verfügung steht. Weiter können die Legetische so mit beispielsweise Fädelbolzen bestückt werden, dass bestimmte Typen von Transformatorkernen in Abhängigkeit eines Materialflusses hergestellt werden können. Wenn beispielsweise zur Herstellung eines Transformatorkerns erforderliche Bandstahlrollen nicht mehr zur Verfügung stehen, kann das Steuersystem die Herstellung anderer Transformatorkerne initiieren, für die ausreichend Material vorhanden ist. Das Steuersystem kann dann Steuerbefehle zum Umbau von Legetischen an die Steuereinrichtung übermitteln sowie eine Herstellung und zur Verfügungstellung von entsprechenden Blechen initiieren.

Das Anordnung und/oder Entfernen der Positionierhilfen kann innerhalb der Positionierfläche auf dem Legetisch anhand der bestimmten Position der Positionierhilfen automatisiert erfolgen.

Die Positionierhilfen bzw. Fädelbolzen und/oder Blechanschläge auf dem Legetisch können mittels eines mehrachsigen Roboters des Positioniersystems positioniert und/oder entfernt werden, wobei der Roboter nach der Positionierung der Positionierhilfen die Bleche an den Positionierhilfen stapeln kann. Insgesamt ist dann lediglich ein Roboter erforderlich, um den Legetisch mit Fädelbolzen und/oder Blechanschlägen auszustatten und nachfolgend den Transformatorkern durch Ablegen der Bleche an den Positionierhilfen auszubilden. Der Roboter kann dann stets immer vor dem Stapeln der Bleche zunächst den Legetisch mit beispielsweise den Fädelbolzen aufbauen, sodass mit ein und demselben Roboter unterschiedlichste Transformatorkerne nacheinander ausgebildet werden können. Die Herstellung von Transformatorkernen wird dadurch besonders flexibel und kostengünstig.

In einer weiteren Ausführungsform des Verfahrens können die Positionierhilfen bzw. Fädelbolzen und/oder Blechanschlägen auf dem Legetisch mittels eines mehrachsigen Roboters des Positioniersystems positioniert und/oder entfernt werden, wobei ein weiterer mehrachsiger Roboter nach der Positionierung der Positionierhilfen Bleche an den Positionierhilfen stapeln kann. Insgesamt können so zwei Roboter zur Herstellung von Transformatorkernen verwendet werden, wobei der weitere Roboter alleine zum Aufbau der Legetische und der Roboter alleine zum Stapeln der Bleche an den beispielsweise Fädelbolzen dienen kann. Dadurch wird es möglich eine große Anzahl von Legetischen in kurzer Zeit mit Fädelbolzen auszustatten bzw. die Fädelbolzen von den Legetischen zu entfernen, wobei das Stapeln von Blechen an den Fädelbolzen mit dem Roboter dann nicht mehr durch die Anordnung der Fädelbolzen auf den Legetischen unterbrochen wird. Insgesamt kann so eine besonders schnelle und damit auch kostengünstige Herstellung von Transformatorkernen erfolgen.

Darüber hinaus ist es möglich eine Mehrzahl von Transformatorkernen auf einem Legetisch aufzubauen. Insbesondere wenn ein Steuersystem für eine Anlage zur Herstellung von Transformatorkernen vorhanden ist, kann dieses Steuersystem eine optimierte Verteilung von transformatorkernen auf einem Legetisch berechnen.

Die Positionierhilfen bzw. Fädelbolzen und/oder Blechanschläge können jeweils einen Transponder aufweisen, wobei eine Sender-Empfänger-Einheit eines Haltesystems die Positionierhilfen anhand des Transponders erkennen kann. Der Transponder kann beispielsweise ein RFID-Transponder sein. In dem Transponder kann ein individueller Code gespeichert sein, der eine Zuordnung bzw. eindeutige Erkennung der beispielsweise Fädelbolzen ermöglicht. Durch die eindeutige Erkennung der Fädelbolzen wird eine automatisierte Handhabung der Fädelbolzen mit einem Roboter wesentlich erleichtert und Fehler vermieden. Die Sender-Empfänger-Einheit kann an dem Roboter und/oder an einem Legetisch angeordnet sein. Weiter kann der Transponder auch die Fädelbolzen beschreibende Daten speichern und an die Sender-Empfänger-Einheit übermitteln. Eine besondere Zuordnung des Transponders bzw. des Fädelbolzens ist dann nicht mehr erforderlich. Der Transponder kann ein passiver Transponder aber auch ein aktiver Transponder sein, wobei dann ein gegenseitiger Datenaustausch mit der Sende-Empfänger-Einheit durchgeführt werden kann. So ist es dann auch möglich dem Transponder Steuerbefehle zu übermitteln und von dem Transponder Statusmeldungen abzufragen.

Das Haltesystem kann demnach mit den Transpondern kommunizieren, wobei mittels einer Halteeinrichtung der Positionierhilfen bzw. Fädelbolzen und/oder Blechanschläge eine Befestigung oder ein Lösen der Positionierhilfen an der Positionierfläche bewirkt werden kann. Über den Transponder kann dann von beispielsweise einer Steuereinrichtung an die Halteeinrichtung ein Steuerbefehl übermittelt werden, der die Befestigung oder das Lösen des beispielsweise Fädelbolzens an der Positionierfläche bewirkt. So ist es beispielsweise möglich den Betrieb einer Vakuumpumpe zu initiieren um den Fädelbolzen mittels Vakuum an der Positionierfläche zu befestigen oder das Öffnen einen Ventils zu initiiere, um das so ausgebildete Vakuum zu entfernen und ein Ablösen des Fädelbolzens von der Positionierfläche zu ermöglichen. Ein Zeitpunkt einer tatsächlichen Befestigung der Fädelbolzen an der Positionierfläche ist prinzipiell beliebig. Da die Fädelbolzen ein vergleichsweise hohes Eigengewicht aufweisen, können die Fädelbolzen mittels des Roboters zunächst frei auf der Positionierfläche positioniert werden, wobei eine tatsächliche Befestigung der Fädelbolzen durch Ausbildung einer ergänzenden Befestigungskraft erst dann erfolgen kann, wenn ein Stapeln von Blechen an den Fädelbolzen unmittelbar bevorsteht.

Weitere vorteilhafte Ausführungsformen des Verfahrens ergeben sich aus den Merkmalen der auf den Anspruch 1 rückbezogenen Unteransprüche.

Nachfolgend wird eine Ausführungsform der Erfindung unter Bezugnahme auf die beigefügten Zeichnungen näher erläutert.

Es zeigen:
- **Fig. 1**: Eine schematische Darstellung einer Anlage zur Herstellung von Transformatorkernen;
- **Fig. 2**: eine Längsschnittansicht einer Ausführungsform eines Fädelbolzens;
- **Fig. 3**: eine Längsschnittansicht einer weiteren Ausführungsform eines Fädelbolzens.

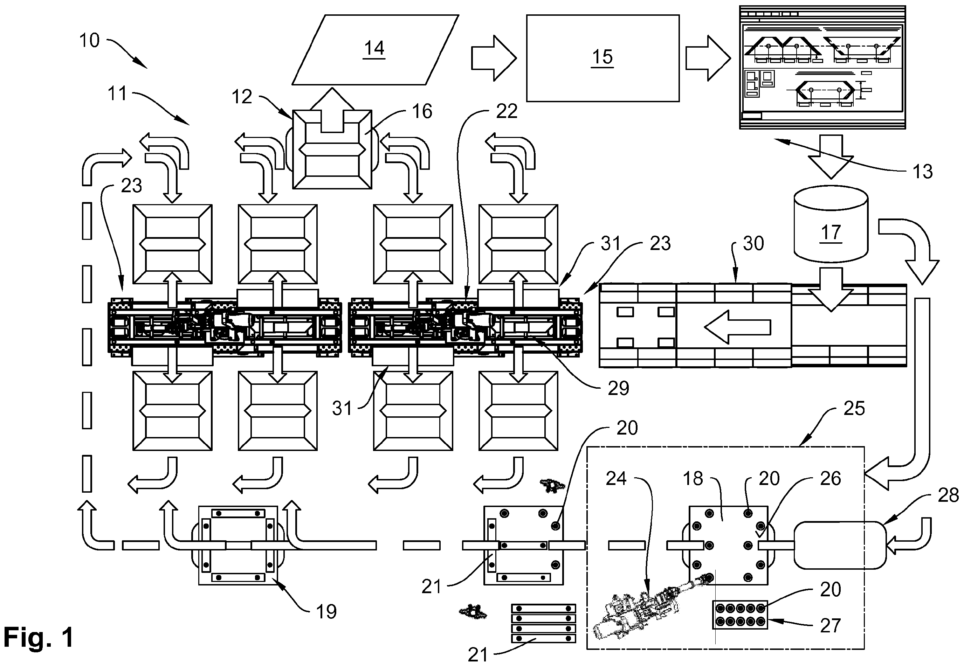

Die **Fig. 1** zeigt eine schematische Darstellung einer Anlage 10 mit einer Vorrichtung 11 zur Herstellung von Transformatorkernen 12. Die Anlage 10 umfasst ein Steuersystem 13 welches zur Steuerung der Anlage 10 dient. Mit dem Steuersystem 13 werden die Transformatorkerne 12 beschreibende Bauteildaten 14 mittels eines sogenannten Kernkonfigurators 15 verarbeitet, sodass Bleche 16 aus denen der Transformatorkern 12 ausgebildet wird, mit ihren Abmessungen berechnet werden. Das Steuersystem 13 übermittelt Steuerbefehle bzw. Daten zur Herstellung des Transformatorkerns 12 an eine Steuereinrichtung 17, die dann mit entsprechenden Steuerbefehlen die Herstellung des Transformatorkerns 12 initiiert.

Die Vorrichtung 11 umfasst unter anderem eine Anzahl von Legetischen 18 mit einem Haltesystem 19 zur Aufnahme von Blechen 16. Das Haltesystem 19 weist zumindest zwei Fädelbolzen 20 und in der hier dargestellten Ausführungsform Unterbauten 21 zur Auflage der Bleche 16 auf. Die Bleche 16 sind mit hier nicht dargestellten Bohrungen ausgebildet und werden auf die Fädelbolzen 20 aufgelegt bzw. aufgesteckt. Das Auflegen der Bleche 16 auf die Fädelbolzen 20 bzw. den Legetisch 18 erfolgt mittels eines Roboters 22 eines Robotersystems 23. Die Positionierung der Fädelbolzen 20 erfolgt ebenfalls mittels eines Roboters 24 eines Positioniersystems 25 auf einer Positionierfläche 26 des Legetischs 18. Die Positionierfläche 26 ist eben ausgebildet, sodass eine freie Positionierung und ortunabhängige Befestigung der Fädelbolzen 20 auf der Positionierfläche 26 nach den Vorgaben des Steuersystems 13 erfolgen kann. Die Fädelbolzen 20 sind in einem Magazin 27 bevorratet und werden mit dem Roboter 24 auf der Positionierfläche 26 angeordnet oder von dieser entfernt. Der Legetisch 18 wird dazu mittels eines selbstfahrenden Wagens 28 transportiert. Der Wagen 28 transportiert den Legetisch 18 zu den hier dargestellten Robotersystemen 23 an denen eine Bestückung des Legetischs 18 mit Blechen 16 bzw. ein Stapeln der Bleche 16 zu dem Transformatorkern 12 erfolgt. Nach dem Fertigstapeln des Transformatorkerns 12 wird der Legetisch 18 wieder mit dem Wagen 28 von den Robotersystem 23 wegtransportiert.

Den Robotersystemen 23 wird mittels einer Fördervorrichtung 29 eine Anzahl Bleche 16 von einer Schneidvorrichtung 30 zugeführt, und benachbart dem jeweiligen Roboter 22 an zwei Ablagepositionen 31 für jeweils unterschiedliche Bleche 16 gestapelt. Eine Steuerung des Roboters 22 bzw. der Ablageposition 31 erfolgt hier ebenfalls mittels der Steuereinrichtung 17. Der Roboter 22 ergreift von den jeweiligen Ablagepositionen 31 die Bleche 16 und positioniert diese an den Fädelbolzen 20 auf dem Legetisch 18, bis der Transformatorkern 12 ausgebildet ist. Der Roboter 22 ist dabei oberhalb der Fördervorrichtung 29 verfahrbar, sodass der Roboter 22 gleichzeitig vier Legetische 18 mit Blechen 16 bestücken kann.

Die hier nur schematisch dargestellte Schneidvorrichtung 30 dient zum Schneiden der Bleche 16 und wird von der Steuereinrichtung 17 gesteuert. In der Schneidvorrichtung 30 werden hier nicht dargestellte Blechstreifen so zugeschnitten, dass die Bleche 16 ausgebildet werden. Der Schneidvorrichtung 30 werden dazu hier nicht dargestellte Blechstreifen von Bandstahlrollen zugeführt.

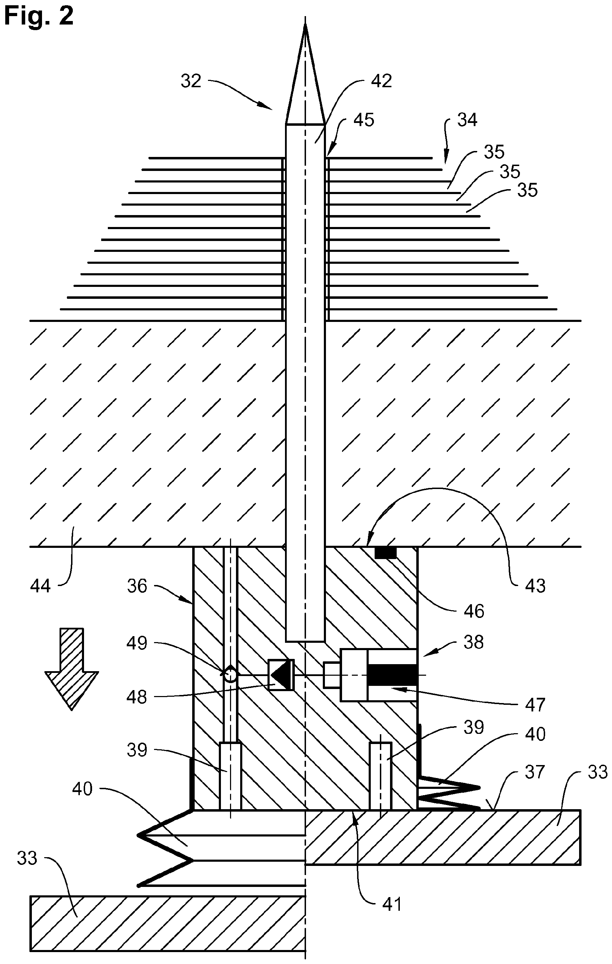

Die **Fig. 2** zeigt eine Ausführungsform eines Fädelbolzens 32 in einer Längsschnittansicht mit einem Legetisch 33 und einem Blechstapel 34 aus Blechen 35 zur Herstellung eines Transformatorkerns. Der Fädelbolzen 32 ist mit einer Halteeinrichtung 36 zur Befestigung des Fädelbolzens 32 auf einer Positionierfläche 37 des Legetischs 33 ausgebildet. Die Halteeinrichtung 36 weist eine Vakuumspanneinheit 38 mit einer hier nicht näher dargestellten Vakuumpumpe auf. Die Halteeinrichtung 36 weist weiter einen Ringkanal 39, in dem ein Vakuum ausgebildet werden kann sowie einen Gummibalg 40 auf, sodass eine Unterseite 41 der Halteeinrichtung 36 mittels einer durch das Vakuum erzeigten Haltekraft abdichtend an der Positionierfläche 37 befestigt werden kann. Ein Bolzen 42 des Fädelbolzens 32 ist fest an der Halteeinrichtung 36 angeordnet, wobei auf eine Oberseite 43 der Halteeinrichtung 36 ein Unterbau 44 zum Auflegen der Bleche 35 aufgelegt ist. Die Bleche 35 weisen alle eine Bohrung 45 auf, die eine genaue Positionierung der Bleche 35 an dem Bolzen 42 des Fädelbolzens 32 ermöglichen.

Die Halteeinrichtung 36 verfügt weiter über einen RFID-Transponder 46 zu Identifikation des Fädelbolzens 32 sowie einen weiteren Transponder 47, mit dem Steuerbefehle einer hier nicht gezeigten Steuereinrichtung empfangen werden können. Mittels eines Antriebs 48 kann ein Sperrventil 49 über den Transponder 47 betätigt werden, sodass das im Ringkanal 39 erzeugte Vakuum durch Zuführung von Außenluft aufgelöst werden kann. Ein Ablösen des Fädelbolzens 32 von dem Legetisch 33 kann so einfach bewerkstelligt werden.

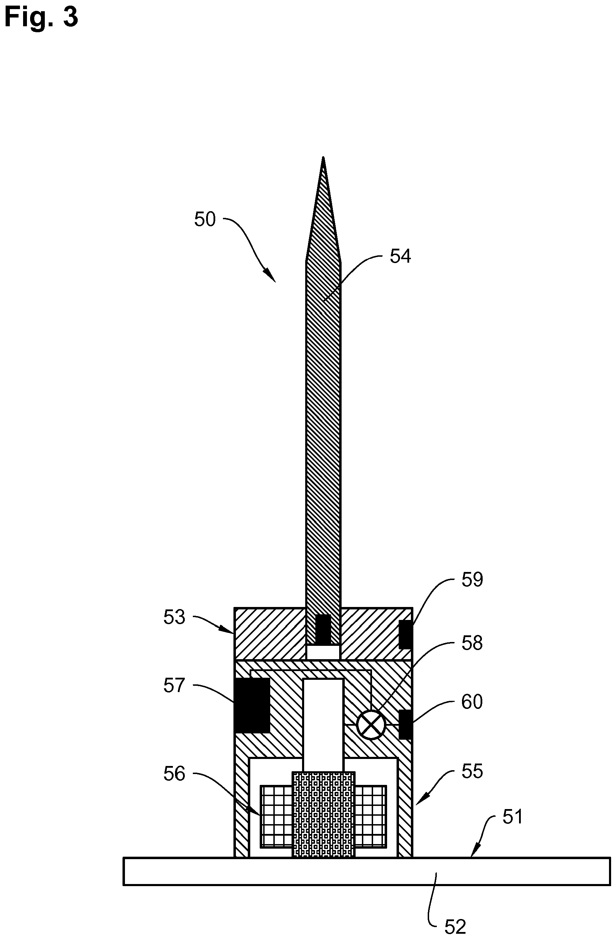

Die **Fig. 3** zeigt eine weitere Ausführungsform eines Fädelbolzens 32 in einer Schnittansicht auf einer Positionierfläche 51 eines Legetischs 52. Der Fädelbolzen 50 umfasst eine Halteeinrichtung 53 mit einem daran angeordneten Bolzen 54 zur Aufnahme von hier nicht dargestellten Blechen eines Transformatorkerns. Die Halteeinrichtung ist als eine Magnetspanneinheit 55 mit einem Elektromagneten 56 ausgebildet. Über einen Akkumulator 57 wird der Elektromagnet 56 mit Strom versorgt und kann mittels eines Antriebs 58 relativ zu der Positionierfläche 51 verschoben werden. Zur Identifikation des Fädelbolzens 50 weist dieser darüber hinaus einen RFID-Transponder 59 auf. Über einen Transponder 60 ist ein Empfang von Steuersignalen einer hier nicht dargestellten Steuereinrichtung zur Betätigung der Halteeinrichtung 53 möglich.

## Patentansprüche

1. Vorrichtung (11) zur Herstellung von Transformatorkernen (12), wobei die Vorrichtung ein Haltesystem (19) mit einem Legetisch (18, 33, 52) zur Aufnahme von Blechen (16, 35), aus denen ein Transformatorkern ausbildbar ist, und mit zumindest zwei Positionierhilfen (20, 32, 50)
für die Bleche aufweist, wobei der Legetisch eine Positionierfläche (26, 37, 51) für die Positionierhilfen ausbildet und mit den Positionierhilfen bestückbar ist,
**dadurch gekennzeichnet,**
**dass** der Legetisch und die Positionierhilfen derart ausgebildet sind, dass eine freie Positionierung und eine ortsunabhängige Befestigung der Positionierhilfen innerhalb der Positionierfläche möglich ist, wobei die Vorrichtung ein Positioniersystem (25) aufweist, mittels dem die Positionierhilfen auf dem Legetisch anordbar und/oder entfernbar sind.

2. Vorrichtung nach Anspruch 1,
**dadurch gekennzeichnet,**
**dass** das Positioniersystem (25) einen mehrachsigen Roboter (24) umfasst.

3. Vorrichtung nach Anspruch 1 oder 2,
**dadurch gekennzeichnet,**
**dass** das Haltesystem (19) als genannte Positionierungshilfen für die Bleche jeweils einen innerhalb der Positionierfläche (26, 37, 51) positionierbaren Fädelbolzen (20, 32, 50) und/oder einen Blechanschlag zur seitlichen Anlage der Bleche (16, 35) umfasst.

4. Vorrichtung nach Anspruch 3,
**dadurch gekennzeichnet,**
**dass** der jeweilige Fädelbolzen (20, 32, 50) auf dem Legetisch (18, 33, 52) und/oder der jeweilige Blechanschlag auf dem Legetisch mittels des Positioniersystems (25) positionierbar und/oder entfernbar ist.

5. Vorrichtung nach Anspruch 3 oder 4,
**dadurch gekennzeichnet,**
**dass** das Positioniersystem (25) ein Magazin (27) mit Fädelbolzen (20, 32, 50) und/oder Blechanschlägen umfasst.

6. Vorrichtung nach einem der vorangehenden Ansprüche,
**dadurch gekennzeichnet,**
**dass** die Positionierhilfen mit jeweils einer Halteeinrichtung (36, 53) zur Befestigung der Positionierhilfe auf der Positionierfläche (26, 37, 51) ausgebildet sind.

7. Vorrichtung nach Anspruch 6,
**dadurch gekennzeichnet,**
**dass** die Halteeinrichtung (36, 53) eine Magnetspanneinheit (55), eine Vakuumspanneinheit (38) oder eine mechanische Spanneinheit zur Befestigung der Positionierhilfe an der Positionierfläche (26, 37, 51) aufweist.

8. Vorrichtung nach Anspruch 7,
**dadurch gekennzeichnet,**
**dass** die Magnetspanneinheit (55) einen Akkumulator (57) und eine Spule aufweist.

9. Vorrichtung nach Anspruch 7,
**dadurch gekennzeichnet,**
**dass** die Vakuumspanneinheit (38) eine Vakuumpumpe und/oder einen Vakuumspeicher aufweist.

10. Vorrichtung nach einem der Ansprüche 6 bis 9,
**dadurch gekennzeichnet,**
**dass** die Halteeinrichtung (36, 53) einen Energiespeicher zur Ausbildung einer Haltekraft aufweist.

11. Vorrichtung nach einem der Ansprüche 1 bis 6,
**dadurch gekennzeichnet,**
**dass** der Legetisch (18, 33, 52) eine magnetisierbare Spannplatte oder eine Vakuum Spannplatte aufweist, die die Positionierfläche (26, 37, 51) ausbildet.

12. Vorrichtung nach einem der vorangehenden Ansprüche,
**dadurch gekennzeichnet,**
**dass** die Positionierfläche (26, 37, 51) vollkommen eben ausgebildet ist.

13. Vorrichtung nach einem der vorangehenden Ansprüche,
**dadurch gekennzeichnet,**
**dass** die Vorrichtung (11) eine Mehrzahl von Legetischen (18, 33, 52) aufweist, die automatisiert bewegbar sind.

14. Verfahren zur Herstellung von Transformatorkernen (12) mit einer Vorrichtung (11), wobei Bleche (16, 35), aus denen ein Transformatorkern ausgebildet wird, auf einem Legetisch (18, 33, 52) eines Haltesystems (19) der Vorrichtung und mit zumindest zwei Positionierhilfen (20, 32, 50) des Haltesystems für die Bleche aufgenommen werden, wobei der Legetisch eine Positionierfläche (26, 37, 51) für die Positionierhilfen ausbildet und mit den Positionierhilfen bestückt wird,
**dadurch gekennzeichnet,**
**dass** der Legetisch und die Positionierhilfen derart ausgebildet sind, dass eine freie Positionierung und eine ortsunabhängige Befestigung der Positionierhilfen innerhalb der Positionierfläche möglich ist, und die Positionierhilfen innerhalb der Positionierfläche auf dem Legetisch frei positioniert und ortsunabhängig befestigt werden, wobei die Positionierhilfen mittels eines Positioniersystems (25) der Vorrichtung auf dem Legetisch angeordnet und/oder entfernt werden.

15. Verfahren nach Anspruch 14,
**dadurch gekennzeichnet,**
**dass** mittels einer Steuereinrichtung (17) der Vorrichtung eine Position der Positionierhilfen innerhalb der Positionierfläche (26, 37, 51) in Abhängigkeit einer Gestalt des herzustellenden Transformatorkerns (12) bestimmt wird.

16. Verfahren nach Anspruch 15,
**dadurch gekennzeichnet,**
**dass** von einem Steuersystem (13) einer Anlage (10) zur Herstellung von Transformatorkernen (12) in Abhängigkeit von einen Transformatorkern beschreibenden Bauteildaten Steuerbefehle an die Steuereinrichtung übermittelt werden.

17. Verfahren nach Anspruch 16,
**dadurch gekennzeichnet,**
**dass** mittels des Steuersystems (13) die Positionierung der Positionierhilfen auf dem Legetisch (18, 33, 52), dem Positioniersystem (25) benachbarte Ablagepositionen (31) für die jeweiligen Bleche und/oder eine Schneidsequenz einer Schneidvorrichtung (30) für Bleche ermittelt wird.

18. Verfahren nach einem der Ansprüche 15 bis 17,
**dadurch gekennzeichnet,**
**dass** das Anordnen und/oder Entfernen der Positionierhilfen innerhalb der Positionierfläche (26, 37, 51) auf dem Legetisch (18, 33, 52) anhand der bestimmten Position der Positionierhilfen automatisiert erfolgt.

19. Verfahren nach einem der Ansprüche 14 bis 18,
**dadurch gekennzeichnet,**
**dass** die Positionierhilfen auf dem Legetisch (18, 33, 52) mittels eines mehrachsigen Roboters des Positioniersystems positioniert und/oder entfernt werden, wobei der Roboter nach der Positionierung der Positionierhilfen die Bleche (16, 35) an den Positionierhilfen stapelt.

20. Verfahren nach einem der Ansprüche 14 bis 18,
**dadurch gekennzeichnet,**
**dass** die Positionierhilfen auf dem Legetisch (18, 33, 52) mittels eines mehrachsigen Roboters (24) des Positioniersystems (23) positioniert und/oder entfernt werden, wobei ein weiterer mehrachsiger Roboter (22) nach der Positionierung der Positionierhilfen die Bleche (16, 35) an den Positionierhilfen stapelt.

21. Verfahren nach einem der Ansprüche 14 bis 20,
**dadurch gekennzeichnet,**
**dass** eine Mehrzahl von Transformatorkernen (12) auf dem Legetisch (18, 33, 52) aufgebaut wird.

22. Verfahren nach einem der Ansprüche 14 bis 21,
**dadurch gekennzeichnet,**
**dass** die Positionierhilfen jeweils einen Transponder (46, 47, 59, 60) aufweisen, wobei eine Sender-Empfänger-Einheit des Haltesystems (19) die Positionierhilfen anhand des Transponders erkennt.

23. Verfahren nach Anspruch 22,
**dadurch gekennzeichnet,**
**dass** das Haltesystem (19) mit den Transpondern (46, 47, 59, 60) kommuniziert, derart, dass mittels einer Halteeinrichtung (36, 53) der Positionierhilfen eine Befestigung oder ein Lösen der Positionierhilfen an der Positionierfläche (26, 37, 51) bewirkt wird.

## Claims

1. A device (11) for producing transformer cores (12), the device comprising a retaining system (19) having a stacking table (18, 33, 52) for collecting sheets of metal (16, 35) from which a transformer core is formed and having at least two positioning aids (20, 32, 50) for the sheets of metal, the stacking table forming a positioning surface (26, 37, 51) for the positioning aids and being equipped with the positioning aids,
**characterized in that**
the stacking table and the positioning aids are realized such that free positioning and location-independent fastening of the positioning aids within the positioning surface is possible, the device having a positioning system (25) by means of which the positioning aids can be disposed on and/or be removed from the stacking table.

2. The device according to claim 1,
**characterized in that**
the positioning system (25) has a multiaxial robot (24).

3. The device according to claim 1 or 2,
**characterized in that**
as mentioned positioning aids for the sheets of metal, the retaining system (19) has a threading bolt (20, 32, 50) for each instance which can be positioned within the positioning surface (26, 37, 51) and/or a sheet-metal abutment for laterally contacting the sheets of metal (16, 35).

4. The device according to claim 3,
**characterized in that**
by means of the positioning system (25), the corresponding threading bolt (20, 32, 50) and/or the corresponding sheet-metal abutment can be positioned on and/or removed from the stacking table (18, 33, 52).

5. The device according to claim 3 or 4,
**characterized in that**
the positioning system (25) has a magazine (27) having threading bolts (20, 32, 50) and/or sheet-metal abutments.

6. The device according to any one of the preceding claims,
**characterized in that**
the positioning aids are each realized having a retaining device (36, 53) for fastening the positioning aids on the positioning surface (26, 37, 51).

7. The device according to claim 6,
**characterized in that**
the retaining device (36, 53) comprises a magnetic clamping unit (55), a vacuum clamping unit (38) or a mechanical clamping unit for fastening the positioning aid on the positioning surface (26, 37, 51).

8. The device according to claim 7,
**characterized in that**
the magnetic clamping unit (55) has an accumulator (57) and a coil.

9. The device according to claim 7,
**characterized in that**
the vacuum clamping unit (38) comprises a vacuum pump and/or a vacuum accumulator.

10. The device according to any one of the claims 6 to 9,
**characterized in that**
the retaining device (36, 53) comprises an energy storage for forming a retaining force.

11. The device according to any one of the claims 1 to 6,
**characterized in that**
the stacking table (18, 33, 52) comprises a magnetizable clamping plate or a vacuum clamping plate which forms the positioning surface (26, 37, 51).

12. The device according to any one of the preceding claims,
**characterized in that**
the positioning surface (26, 37, 51) is entirely flat.

13. The device according to any one of the preceding claims,
**characterized in that**
the device (11) has a plurality of stacking tables (18, 33, 52) which can be moved in an automated manner.

14. A method for producing transformer cores (12) using a device (11), sheets of metal (16, 35) from which a transformer core is constructed being collected on a stacking table (18, 33, 52) of a retaining system (19) of the device and by means of at least two positioning aids (20, 33, 52) of the retaining system for the sheets of metal, the stacking table forming a positioning surface (26, 37, 51) for the positioning aids and being equipped with the positioning aids,
**characterized in that**
the stacking table and the positioning aids are realized such that free positioning and location-independent fastening of the positioning aids within the positioning surface is possible, and the positioning aids are freely positioned and fastened independently of location within the position surface, the positioning aids being disposed on and/or removed from the stacking table by means of a positioning system (25) of the device.

15. The method according to claim 14,
**characterized in that**
a position of the positioning aids (26, 37, 51) within the positioning surface (26, 37, 51) is determined by means of a control device (17) of the device as a function of a shape of the transformer core (12) to be produced.

16. The method according to claim 15,
**characterized in that**
control commands are transmitted to the control device from a control system (13) of an installation (10) for producing transformer cores (12) as a function of component data describing a transformer core.

17. The method according to claim 16,
**characterized in that**
the positioning of the positioning aids on the stacking table (18, 33, 52), storage positions (31) adjacent to the positioning system (25) and intended for the respective sheets of metal, and/or a cutting sequence of a cutting device (30) for sheets of metal are determined by means of the control system (13).

18. The method according to any one of the claims 15 to 17,
**characterized in that**
the positioning aids are disposed on and/or removed from the stacking table (18, 33, 52) in an automated manner within the positioning surface (26, 37, 51) by means of the determined position of the positioning aids.

19. The method according to any one of the claims 14 to 18,
**characterized in that**
the positioning aids are positioned on and/or removed from the stacking table (18, 33, 52) by means of a multiaxial robot of the positioning system, the robot stacking the sheets of metal (16, 35) on the positioning aids after positioning the positioning aids.

20. The method according to any one of the claims 14 to 18,
**characterized in that**
the positioning aids are positioned on and/or removed from the stacking table (18, 33, 52) by means of a multiaxial robot (24) of the positioning system, a further multiaxial robot (22) stacking the sheets of metal (16, 35) on the positioning aids after positioning the positioning aids.

21. The method according to any one of the claims 14 to 20,
**characterized in that**
a plurality of transformer cores (12) are constructed on the stacking table (18, 33, 52).

22. The method according to any one of the claims 14 to 21,
**characterized in that**
the positioning aids each have a transponder (46, 47, 59, 60), a transmitter-receiver unit of the retaining system (19) identifying the positioning aids by means of the transponder.

23. The method according to claim 22,
**characterized in that**
the retaining system (19) communicates with the transponders (46, 47, 59, 60) in such a manner that a fastening or loosening of the positioning aids on the positioning surface (26, 37, 51) is caused by means of a retaining device (36, 53) of the positioning aids.

## Revendications

1. Dispositif (11) pour produire des noyaux de transformateurs (12), le dispositif comprenant un système de maintien (19) ayant une table d'empilage (18, 33, 52) pour collecter des tôles (16, 35) desquelles un noyau de transformateurs est formé et ayant au moins deux aides de positionnement (20, 32, 50) pour les tôles, la table d'empilage formant une surface de positionnement (26, 37, 51) pour les aides de positionnement et étant équipée d'aides de positionnement,
**caractérisé en ce que**
la table d'empilage et les aides de positionnement sont réalisées de telle manière que les aides de positionnement peuvent être positionnées librement et fixées indépendamment de lieu dans la surface de positionnement, le dispositif ayant un système de positionnement (25) au moyen duquel les aides de positionnement peuvent être disposées sur et/ou être enlevées de la table d'empilage.

2. Dispositif selon la revendication 1,
**caractérisé en ce que**
le système de positionnement (25) a un robot (24) multiaxial.

3. Dispositif selon la revendication 1 ou 2,
**caractérisé en ce que**
le système de maintien (19) a un boulon de filetage (20, 32, 50) qui peut être positionné dans la surface de positionnement (26, 37, 51) et/ou une butée de tôle pour contacter latéralement les tôles (16, 35) comme lesdits aides de positionnement pour chacune des tôles.

4. Dispositif selon la revendication 3,
**caractérisé en ce que**
le boulon de filetage (20, 32, 50) correspondant et/ou l'butée de tôle correspondant peut être positionné sur et/ou être enlevé de la table d'empilage (18, 33, 52) au moyen du système de positionnement (25).

5. Dispositif selon la revendication 3 ou 4,
**caractérisé en ce que**
le système de positionnement (25) a un magasin (27) ayant des boulons de filetage (20, 32, 50) et/ou des butées de tôle.

6. Dispositif selon l'une quelconque des revendications précédentes,
**caractérisé en ce que**
les aides de positionnement ont chacune un dispositif de maintien (36, 53) pour fixer des aides de positionnement sur la surface de positionnement (26, 37, 51).

7. Dispositif selon la revendication 6,
**caractérisé en ce que**
le dispositif de maintien (36, 53) comprend une unité de fermeture magnétique (55), une unité de fermeture de vide (38) ou une unité de fermeture mécanique pour fixer l'aide de positionnement sur la surface de positionnement (26, 37, 51).

8. Dispositif selon la revendication 7,
**caractérisé en ce que**
l'unité de fermeture magnétique (55) a un accumulateur (57) et une bobine.

9. Dispositif selon la revendication 7,
**caractérisé en ce que**
l'unité de fermeture de vide (38) comprend une pompe de vide et/ou une accumulateur de vide.

10. Dispositif selon l'une quelconque des revendications 6 à 9,
**caractérisé en ce que**
le dispositif de maintien (36, 53) comprend un accumulateur d'énergie pour générer une force de maintien.

11. Dispositif selon l'une quelconque des revendications 1 à 6,
**caractérisé en ce que**
la table d'empilage (18, 33, 52) comprend une plaque de fermeture magnétique ou une plaque de fermeture de vide qui forme la surface de positionnement (26, 37, 51).

12. Dispositif selon l'une quelconque des revendications précédentes,
**caractérisé en ce que**
la surface de positionnement (26, 37, 51) est complètement plane.

13. Dispositif selon l'une quelconque des revendications précédentes,
**caractérisé en ce que**
le dispositif (11) a une pluralité de tables d'empilage (18, 33, 52) qui peut être bougées automatiquement.

14. Procédé pour produire des noyaux de transformateurs (12) en utilisant un dispositif (11), des tôles (16, 35) desquelles un noyau de transformateurs est construit étant collectées sur une table d'empilage (18, 33, 52) d'un système de maintien (19) du dispositif et au moyen d'au moins deux aides de positionnement (20, 33, 52) du système de maintien pour les tôles, la table d'empilage formant une surface de positionnement (26, 37, 51) pour les aides de positionnement et étant équipée d'aides de positionnement,
**caractérisé en ce que**
la table d'empilage et les aides de positionnement sont réalisées de telle manière que les aides de positionnement peuvent être positionnées librement et fixées indépendamment de lieu dans la surface de positionnement, les aides de positionnement étant positionnées librement et étant fixées indépendamment de lieu dans la surface de positionnement, les aides de positionnement étant disposées sur et/ou enlevées de la table d'empilage au moyen du système de positionnement (25) du dispositif.

15. Procédé selon la revendication 14,
**caractérisé en ce**
**qu'**une position des aides de positionnement (26, 37, 51) dans la surface de positionnement (26, 37, 51) est déterminée au moyen d'un dispositif de contrôle (17) du dispositif en fonction d'une forme du noyau de transformateurs (12) à être produit.

16. Procédé selon la revendication 15,
**caractérisé en ce que**
des instructions de contrôle sont transmises au dispositif de contrôle par un système de contrôle (13) d'une installation (10) afin de produire des noyaux de transformateurs (12) en fonction de données de composant décrivant un noyau de transformateurs.

17. Procédé selon la revendication 16,
**caractérisé en ce que**
le positionnement des aides de positionnement sur la table d'empilage (18, 33, 52), des positions de stockage (31) adjacent au système de positionnement (25) et destiné aux tôles respectives et/ou une séquence de coupage d'un dispositif de coupage (30) pour les tôles sont déterminés au moyen du système de contrôle (13).

18. Procédé selon l'une quelconque des revendications 15 à 17,
**caractérisé en ce que**
les aides de positionnement sont disposées sur et/ou sont enlevées de la table d'empilage (18, 33, 52) dans la surface de positionnement (26, 37, 51) dans une manière automatique au moyen de la position déterminée des aides de positionnement.

19. Procédé selon l'une quelconque des revendications 14 à 18,
**caractérisé en ce que**
les aides de positionnement sont positionnées sur et/ou sont enlevées de la table d'empilage (18, 33, 52) au moyen d'un robot multiaxial du système de positionnement, le robot empilant les tôles (16, 35) sur les aides de positionnement après les aides de positionnement étant positionnées.

20. Procédé selon l'une quelconque des revendications 14 à 18,
**caractérisé en ce que**
les aides de positionnement sont positionnées sur et/ou sont enlevées de la table d'empilage (18, 33, 52) au moyen d'un robot (24) multiaxial du système de positionnement, un autre robot (22) multiaxial empilant les tôles (16, 35) sur les aides de positionnement après les aides de positionnement étant positionnées.

21. Procédé selon l'une quelconque des revendications 14 à 20,
**caractérisé en ce**
**qu'**une pluralité de noyaux de transformateurs (12) sont construits sur la table d'empilage (18, 33, 52).

22. Procédé selon l'une quelconque des revendications 14 à 21,
**caractérisé en ce que**
les aides de positionnement ont chacune un transpondeur (46, 47, 59, 60), une unité d'émetteur-récepteur du système de maintien (19) identifiant les aides de positionnement au moyen du transpondeur.

23. Procédé selon la revendication 22,
**caractérisé en ce que**
le système de maintien (19) communique avec les transpondeurs (46, 47, 59, 60) de telle manière que les aides de positionnement sur la surface de positionnement (26, 37, 51) sont fixées ou sont desserrées sur la surface de positionnement (26, 37, 51) au moyen d'un dispositif de maintien (36, 53) des aides de positionnement.
